# EUROPEAN PATENT APPLICATION

(11) **EP 4 187 848 A1**
(43) Date of publication of application: **31.05.2023**
(21) Application number: 22152954.8
(22) Date of filing: 24.01.2022
(51) Int. Cl.: H04L 9/40, H04L 67/141

(54) **CAUSING OR PREVENTING AN UPDATE TO A NETWORK ADDRESS TRANSLATION TABLE**

(30) Priority: 24.11.2021 US 202117456437
(71) Applicant: Juniper Networks, Inc., Sunnyvale, CA 94089 (US)
(72) Inventor: BOLLINENI, Anil Kumar, Sunnyvale, 94089 (US); MOHAN, Hemachandran Karnam, Sunnyvale, 94089 (US); MOHAMED, Abdul Kadhar Jeelany Habeeb, Sunnyvale, 94089 (US)
(74) Representative: D Young & Co LLP

(57) **Abstract**

A network device may be configured to receive one or more packets that are to initiate a communication session. The network device may be configured to process, using a plurality of packet analysis techniques, the one or more packets to determine analysis information associated with the one or more packets. The network device may be configured to determine, based on the analysis information associated with the one or more packets, whether the one or more packets are suspicious. The network device may be configured to cause or prevent inclusion in a NAT table, based on determining whether the one or more packets are suspicious, of at least one entry associated with the one or more packets and the communication session.

## Description

### BACKGROUND

In computer networking, a network address translation (NAT) table is a networking service that allows devices on a private network to communicate with devices on a public network, such as the Internet. Using a NAT table allows one or more devices, on a private network, to be viewed, by devices outside the private network, as having the same Internet connection or the same network address, thereby providing security to the one or more devices on the private network.

### SUMMARY

Particular embodiments are set out in the independent claims. Various optional examples are set out in the dependent claims. Some implementations described herein relate to a network device. The network device may include one or more memories and one or more processors. The network device may be configured to receive one or more packets that are to initiate a communication session. The network device may be configured to process, using a plurality of packet analysis techniques, the one or more packets to determine analysis information associated with the one or more packets. The network device may be configured to determine, based on the analysis information associated with the one or more packets, whether the one or more packets are suspicious. The network device may be configured to cause or prevent inclusion in a NAT table, based on determining whether the one or more packets are suspicious, of at least one entry associated with the one or more packets and the communication session.

Some implementations described herein relate to a computer-readable medium that includes a set of instructions for a network device. The set of instructions, when executed by one or more processors of the network device, may cause the network device to receive one or more packets that are to initiate a communication session. The set of instructions, when executed by one or more processors of the network device, may cause the network device to process, using a plurality of packet analysis techniques, the one or more packets to determine analysis information associated with the one or more packets. The set of instructions, when executed by one or more processors of the network device, may cause the network device to determine, based on the analysis information associated with the one or more packets, whether the one or more packets are suspicious. The set of instructions, when executed by one or more processors of the network device, may cause the network device to cause or prevent, based on determining whether the one or more packets are suspicious, an update to a NAT table.

Some implementations described herein relate to a method. The method may include receiving, by a network device, a packet associated with initiating a communication session. The method may include processing, by the network device, the packet to determine analysis information associated with packet. The method may include determining, by the network device and based on the analysis information associated with the packet, whether the packet is suspicious. The method may include causing or preventing, by the network device and based on determining whether the packet is suspicious, an update to a NAT table.

### BRIEF DESCRIPTION OF THE DRAWINGS

Figs. 1A-1G are diagrams of an example implementation described herein.
Fig. 2 is a diagram of an example environment in which systems and/or methods described herein may be implemented.
Figs. 3-4 are diagrams of example components of one or more devices of Fig. 2.
Fig. 5 is a flowchart of an example process relating to causing or preventing an update to a network address translation table.

### DETAILED DESCRIPTION

The following detailed description of example implementations refers to the accompanying drawings. The same reference numbers in different drawings may identify the same or similar elements.

A typical network device maintains a NAT table to assign ports of the network device for traffic associated with particular communication sessions (e.g., between endpoint devices). However, the network device may receive malicious traffic, such as denial of service attack traffic, that causes the network device to update the NAT table to assign ports of the network device for illegitimate communication sessions and thereby prevent use of these ports for traffic associated with legitimate communication sessions. Further, even if the malicious traffic stops or is otherwise prevented from reaching the network device, the NAT table retains entries for the illegitimate communication sessions until a NAT table timeout has expired. Consequently, in some cases, the network device is unable to process and/or allocate resources for new legitimate communication sessions while entries in the NAT table are allocated to illegitimate communication sessions. This impacts a performance of the network device and/or a network associated with the network device. This also decreases a likelihood that service level agreement (SLA) criteria, quality of service (QoS) criteria, or other criteria associated with routing traffic associated with new legitimate communication sessions through the network are satisfied.

Some implementations described herein are directed to a network device. The network device receives one or more packets that are configured to initiate a communication session (e.g., between endpoint devices). The network device processes the one or more packets (e.g., using one or more packet analysis techniques) to determine analysis information associated with the one or more packets. The analysis information includes, for example, information indicating whether an application indicated by the one or more packets is associated with one or more ports, information indicating whether the one or more packets are associated with at least one suspicious endpoint, information indicating whether the one or more packets exhibit at least one suspicious pattern, and/or information indicating whether a packet rate associated with the one or more packets exceeds a packet rate threshold. Accordingly, the network device determines (e.g., based on the analysis information) whether the one or more packets are suspicious (e.g., whether the one or more packets are likely part of traffic, such as malicious traffic, that is associated with an illegitimate communication session) and therefore causes or prevents an update to the NAT table (e.g., to allow or to prevent ports of the network device to be assigned for traffic associated with the communication session indicated by the one or more packets). For example, the network device causes the update to the NAT table based on determining that the one or more packets are not suspicious, or prevents the update to the NAT table (e.g., by dropping the one or more packets) based on determining that the one or more packets are suspicious.

In this way, the network device causes the NAT table to be updated only when the one or more packets are determined to not be suspicious. This prevents assignment of ports of the network device for traffic that is associated with illegitimate communication sessions and thereby facilitates use of the ports for traffic associated with legitimate communication sessions. Further, some implementations described herein enable removal of at least one entry from the NAT table before a typical NAT table update process (e.g., that is based on a NAT table timeout) would occur. This facilitates efficient reuse of the ports (e.g., via a new assignment of the ports in the NAT table) for traffic associated with other legitimate communication sessions. Accordingly, some implementations described herein provide an improved performance of the network device and/or a network associated with the network device (e.g., as compared to a typical network device and/or a network associated with the typical network device). This also improves a likelihood that SLA criteria, QoS criteria, or other criteria associated with routing traffic associated with legitimate communication sessions through the network are satisfied.

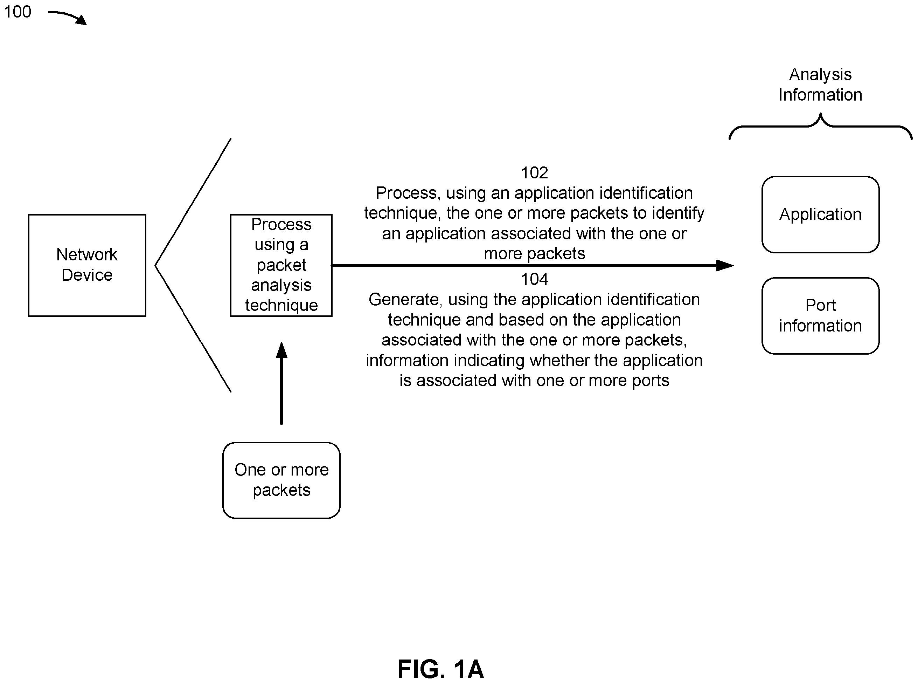

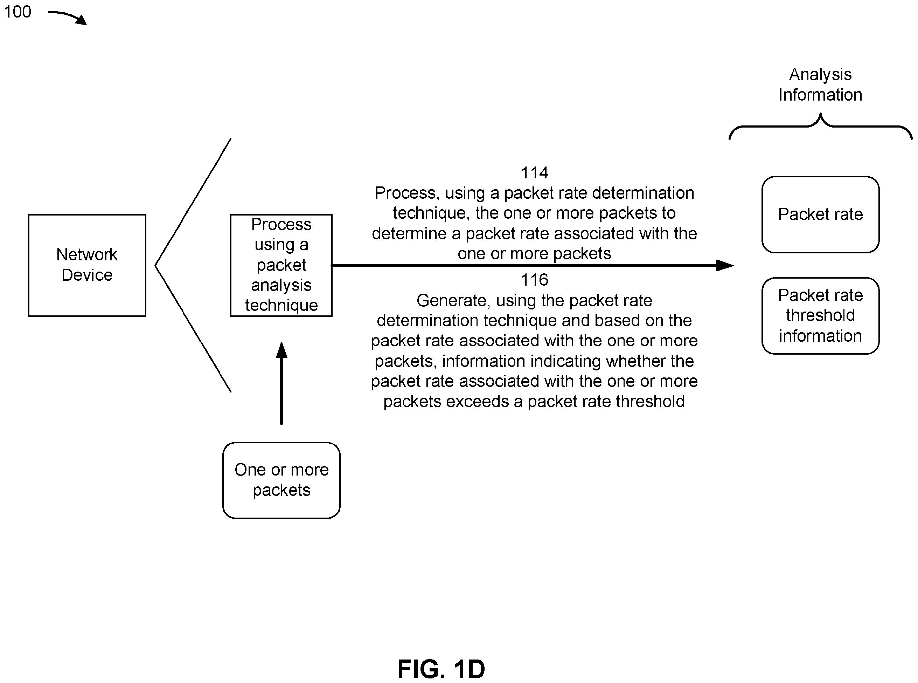

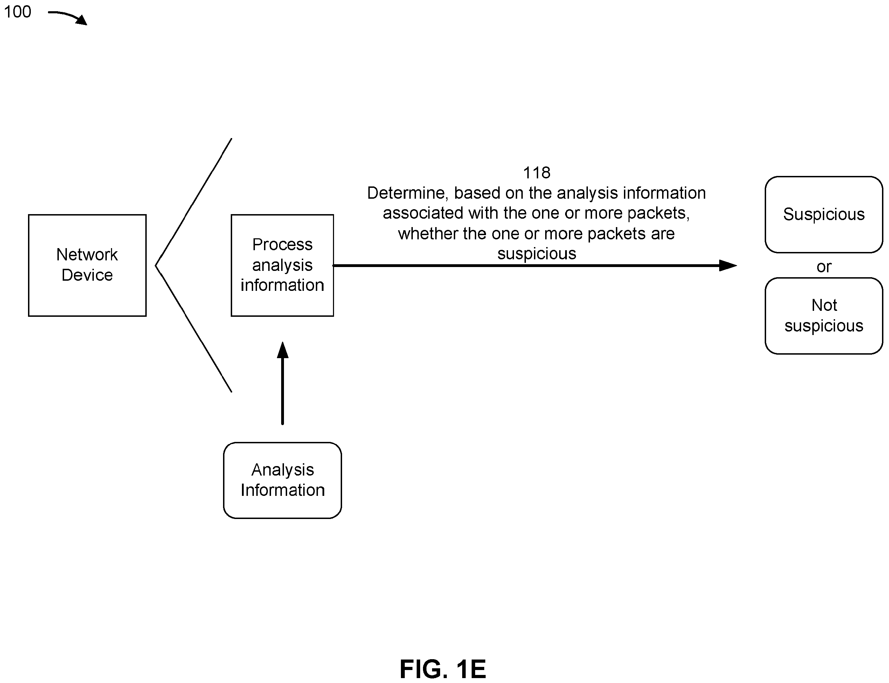

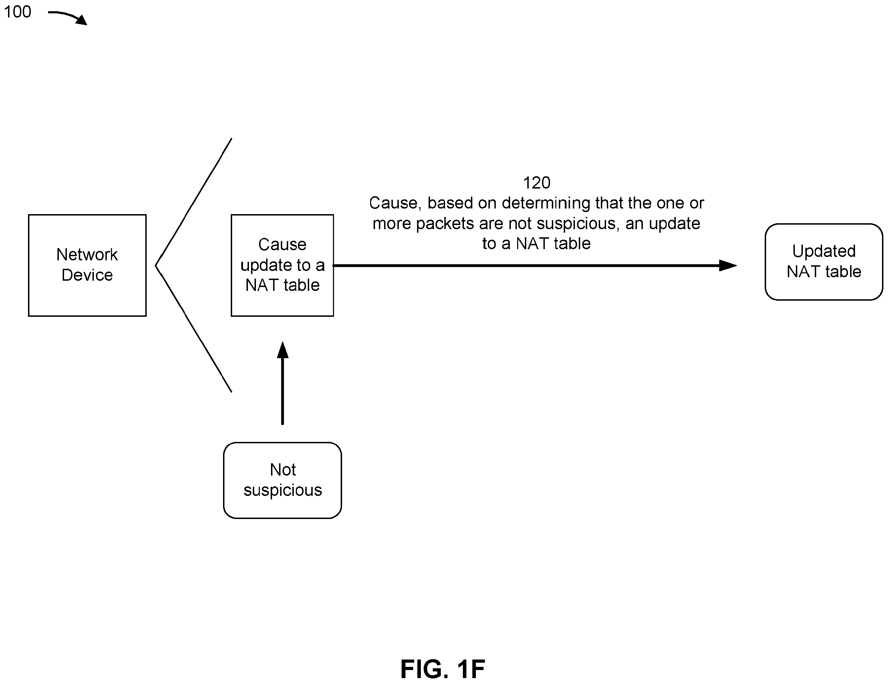

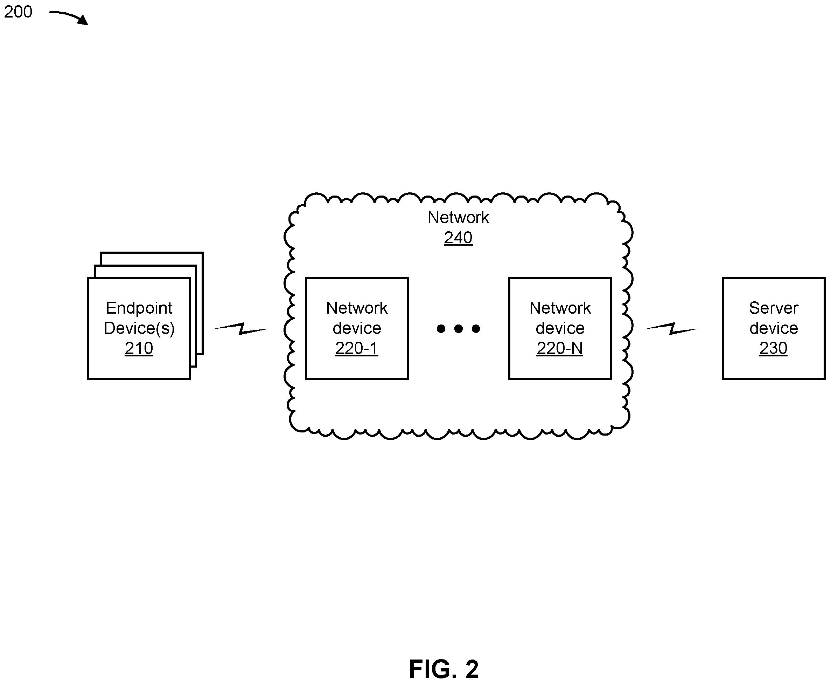

Figs. 1A-1G are diagrams of one or more example implementations 100 described herein. Example implementation(s) 100 may include a network device, one or more endpoint devices, and/or a server device, which are described in more detail below in connection with Figs. 2-4.

In some implementations, the network device may receive one or more packets. The one or more packets may be configured to initiate a communication session. For example, a first endpoint device may send, to the network device, one or more packets that are intended to initiate a communication session between the first endpoint device and a second endpoint device. The network device may be configured to route the one or more packets to the second endpoint device, such as after determining that the one or more packets are not suspicious (e.g., as described elsewhere herein), to facilitate establishment of the communication session (e.g., between the first endpoint device and the second endpoint device).

As shown in Figs. 1A-1D, the network device may process the one or more packets (e.g., before determining whether to route or to drop the one or more packets, as described elsewhere herein). In some implementations, the network device may process the one or more packets to determine analysis information associated with the one or more packets. The analysis information may include, for example, information indicating whether an application indicated by the one or more packets is associated with one or more ports (e.g., whether one or more ports of the network device are configured to support traffic associated with the application), information indicating whether the one or more packets are associated with at least one suspicious endpoint (e.g., whether an origin or a destination of the one or more packets is associated with a suspicious endpoint), information indicating whether the one or more packets exhibit at least one suspicious pattern (e.g., whether the one or more packets include one or more suspicious code patterns), information indicating whether a packet rate associated with the one or more packets exceeds a packet rate threshold (e.g., whether a packet rate of the one or more packets, as received by the network device, exceeds a packet rate limit threshold configured for the network device), and/or similar information.

In a first example, and as shown in Fig. 1A, the network device may process the one or more packets using an application identification technique to determine the analysis information. As shown by reference number 102, the network device may process, using the application identification technique, the one or more packets to identify an application associated with the one or more packets. For example, the network device may parse and/or read the one or more packets to identify an application indicated by at least one segment of the one or more packets. As shown by reference number 104, the network device may generate, using the application identification technique and based on the application associated with the one or more packets, information indicating whether the application is associated with one or more ports (e.g., used in exchanging application data between endpoints). For example, the network device may identify a data structure (e.g., a database, a table, and/or an electronic file, among other examples) that stores and/or maintains network device port information. Accordingly, the network device may identify, based on the application associated with the one or more packets, an entry in the data structure that is associated with the application, and may process (e.g., parse or read) the entry to identify the one or more ports. Alternatively, the network device may search the data structure, may not identify any entry that is associated with the application, and therefore may determine that the application is not associated with any ports. In some implementations, the application being or not being associated with one or more ports may indicate a likelihood of the one or more packets being suspicious.

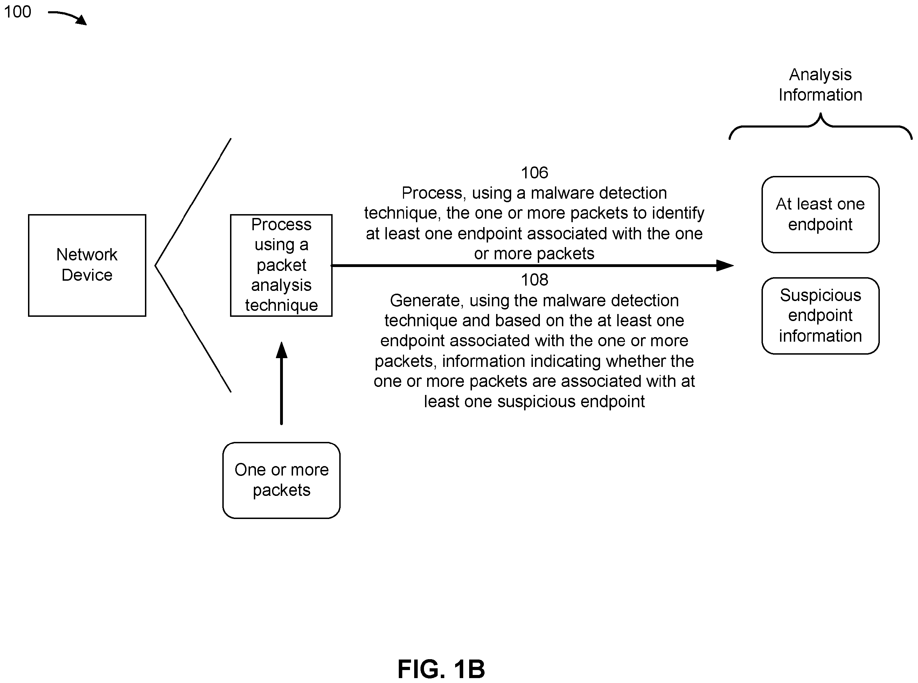

Additionally, or alternatively, in a second example, and as shown in Fig. 1B, the network device may process the one or more packets using a malware detection technique to determine the analysis information. As shown by reference number 106, the network device may process, using the malware detection technique, the one or more packets to identify at least one endpoint associated with the one or more packets. For example, the network device may parse and/or read the one or more packets to identify an endpoint (e.g., an origin endpoint or a destination endpoint) indicated by at least one segment of the one or more packets. As shown by reference number 108, the network device may generate, using the malware detection technique and based on the at least one endpoint associated with the one or more packets, information indicating whether the one or more packets are associated with at least one suspicious endpoint. For example, the network device may identify a data structure (e.g., a database, a table, and/or an electronic file, among other examples) that stores and/or maintains endpoint information (e.g., information that indicates whether endpoints in a network are considered to be suspicious). Accordingly, the network device may identify an entry in the data structure that is associated with the endpoint and may process (e.g., parse or read) the entry to determine whether the endpoint is suspicious. Accordingly, the network device may determine, based on the determination of whether the endpoint is suspicious, whether the one or more packets are associated with at least one suspicious endpoint. In some implementations, the one or more packets being or not being associated with at least one suspicious endpoint may indicate a likelihood of the one or more packets being suspicious.

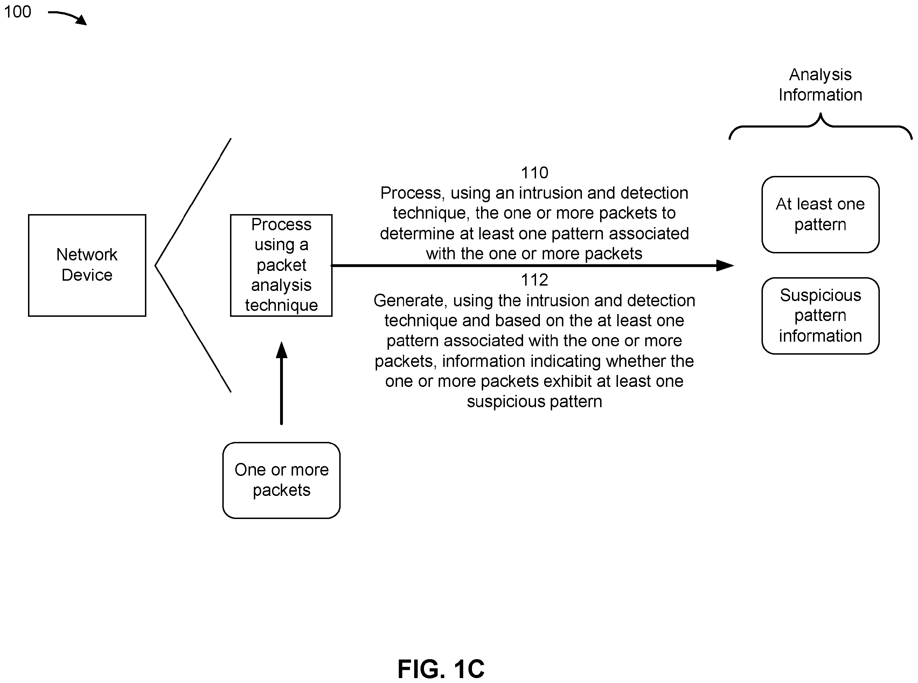

Additionally, or alternatively, in a third example, and as shown in Fig. 1C, the network device may process the one or more packets using an intrusion and detection technique to determine the analysis information. As shown by reference number 110, the network device may process, using the intrusion and detection technique, the one or more packets to determine at least one pattern associated with the one or more packets. For example, the network device may parse the one or more packets to identify one or more portions of the one or more packets (e.g., where each portion is associated with a code pattern). As shown by reference number 112, the network device may generate, using the intrusion and detection technique and based on the at least one pattern associated with the one or more packets, information indicating whether the one or more packets exhibit at least one suspicious pattern. For example, the network device may identify a data structure (e.g., a database, a table, and/or an electronic file, among other examples) that stores and/or maintains information associated with suspicious code patterns (e.g., information that indicates code patterns that are suspicious). Accordingly, the network device may search, for each portion of the one or more portions, the data structure for an entry that is associated with a code pattern of the portion. The network device may identify one or more entries that are associated with at least some of the one or more portions, and therefore may determine that the one or more packets exhibit at least one suspicious pattern. Alternatively, the network device may not identify any entries that are associated with the one or more portions, and therefore may determine that the one or more packets do not exhibit any suspicious pattern. In some implementations, the one or more packets exhibiting or not exhibiting at least one suspicious pattern may indicate a likelihood of the one or more packets being suspicious.

Additionally, or alternatively, in a fourth example, and as shown in Fig. ID, the network device may process the one or more packets using a packet rate determination technique to determine the analysis information. As shown by reference number 114, the network device may process, using the packet rate determination technique, the one or more packets to determine a packet rate associated with the one or more packets. For example, the network device may identify a number of the one or more packets received during a period of time to determine the packet rate (e.g., number of packets per millisecond, per second, per minute, or per another period of time). As shown by reference number 116, the network device may generate, using the packet rate determination technique and based on the packet rate associated with the one or more packets, information indicating whether the packet rate associated with the one or more packets exceeds a packet rate threshold (e.g., an upper limit packet rate associated with a rate of packets entering the network device). For example, the network device may determine whether the packet rate of the one or more packets is greater than the packet rate threshold to determine whether the packet rate exceeds the packet rate threshold. In some implementations, the packet rate exceeding or not exceeding the packet rate threshold may indicate a likelihood of the one or more packets being suspicious.

In this way, as shown in Figs. 1A-1D, the network device may use at least one packet analysis technique to determine the analysis information associated with the one or more packets.

As shown in Fig. IE, and by reference number 118, the network device may determine whether the one or more packets are suspicious (e.g., based on the analysis information associated with the one or more packets). In some implementations, the network device may identify a set of suspicious determination criteria and may determine, based on the analysis information associated with the one or more packets, whether at least a subset of the set of suspicious determination criteria are satisfied.

For example, the network device may identify a first suspicious determination criterion that is satisfied when an application indicated by a set of packets (e.g., at least one packet) is not associated with any ports of the network device. Accordingly, the network device may determine that the first suspicious determination criterion is satisfied when the analysis information indicates that the application is not associated with one or more ports, or, alternatively, is not satisfied when the analysis information indicates that the application is associated with one or more ports. As another example, the network device may identify a second suspicious determination criterion that is satisfied when a set of packets (e.g., at least one packet) is associated with a suspicious endpoint. Accordingly, the network device may determine that the second suspicious determination criterion is satisfied when the analysis information indicates that the one or more packets are associated with at least one suspicious endpoint, or, alternatively, is not satisfied when the analysis information indicates that the one or more packets are not associated with at least one suspicious endpoint. In an additional example, the network device may identify a third suspicious determination criterion that is satisfied when a set of packets (e.g., at least one packet) exhibits at least one suspicious pattern. Accordingly, the network device may determine that the third suspicious determination criterion is satisfied when the analysis information indicates that the one or more packets exhibit at least one suspicious pattern, or, alternatively, is not satisfied when the analysis information indicates that the one or more packets do not exhibit at least one suspicious pattern. In another example, the network device may identify a fourth suspicious determination criterion that is satisfied when a packet rate associated with a set of packets (e.g., at least one packet) exceeds a packet rate threshold. Accordingly, the network device may determine that the fourth suspicious determination criterion is satisfied when the analysis information indicates that the packet rate associated with the one or more packets exceeds the packet rate threshold, or, alternatively, is not satisfied when the analysis information indicates that the packet rate associated with the one or more packets does not exceed the packet rate threshold.

Accordingly, when the network device determines that at least a subset of the suspicious determination criteria are satisfied (e.g., some or all of the suspicious determination criteria are satisfied), the network device may determine that the one or more packets are suspicious. For example, the network device may determine that the one or more packets are suspicious when a majority of the suspicious determination criteria are satisfied. Additionally, or alternatively, when the network device determines that at least a subset of the suspicious determination criteria are not satisfied, the network device may determine that the one or more packets are not suspicious. For example, the network device may determine that the one or more packets are not suspicious when one or more particular suspicious determination criteria (or a particular combination of one or more suspicious determination criteria) are not satisfied.

As shown in Fig. IF, and by reference number 120, the network device may cause an update to a NAT table. The NAT table may be included in and/or maintained by the network device, another network device, or the server device. The network device may cause the update to the NAT table based on determining that the one or more packets are not suspicious (e.g., as described herein in relation to Fig. IE and reference number 118). For example, the network device may cause the update to the NAT table by causing inclusion, in the NAT table, of at least one entry that is associated with the one or more packets and/or the communication session (e.g., that the one or more packets are configured to initiate). In some implementations, causing inclusion, in the NAT table, of the at least one entry causes the communication session to be initiated. In some implementations, the network device may route the one or more packets to the other network device and/or to an endpoint device to cause the other network device and/or the server device to update the NAT table (e.g., by causing inclusion of the at least one entry in the NAT table) and/or a communication table of the other network device and/or the endpoint device.

In some implementations, after causing the communication session to be initiated, the network device may determine that no additional packet associated with the communication session has been communicated for a threshold period of time (e.g., since a previous packet associated with the communication session was communicated). The threshold period of time may be 10 seconds, 30 seconds, a minute, or another period of time that is less than a timeout period of time associated with the NAT table. Accordingly, the network device may cause, based on determining that no additional packet associated with the communication session has been communicated for the threshold period of time, another update to a NAT table. For example, the network device may cause the at least one entry to be removed from the NAT table. In this way, the network device may cause removal of the at least one entry from the NAT table before a typical NAT table update process (e.g., that is based on the timeout period) would occur.

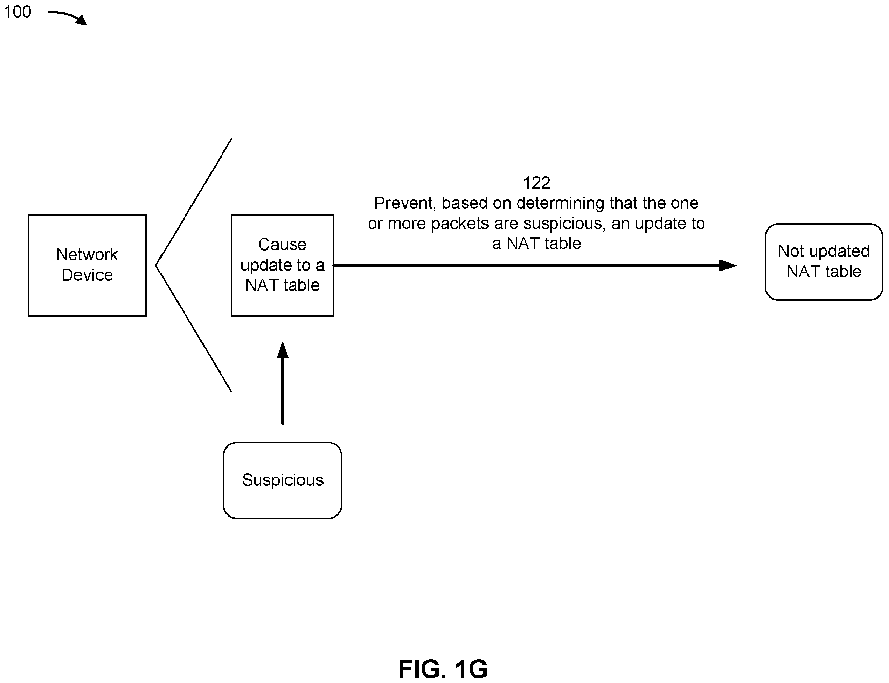

As shown in Fig. 1G, and by reference number 122, the network device may prevent an update to a NAT table. For example, the network device network device may prevent the update to the NAT table based on determining that the one or more packets are suspicious (e.g., as described herein in relation to Fig. IE and reference number 118). For example, the network device may prevent inclusion, in the NAT table, of at least one entry that is associated with the one or more packets and/or the communication session (e.g., that the one or more packets are configured to initiate). In some implementations, preventing inclusion, in the NAT table, of the at least one entry prevents the communication session from being initiated. In some implementations, the network device may drop the one or more packets to prevent the update to the NAT table.

As indicated above, Figs. 1A-1G are provided merely as one or more examples. Other examples may differ from what is described with regard to Figs. 1A-1G.

Fig. 2 is a diagram of an example environment 200 in which systems and/or methods described herein may be implemented. As shown in Fig. 2, environment 200 may include an endpoint device 210, a group of network devices 220 (shown as network device 220-1 through network device 220-N), a server device 230, and a network 240. Devices of environment 200 may interconnect via wired connections, wireless connections, or a combination of wired and wireless connections.

Endpoint device 210 includes one or more devices capable of receiving, generating, storing, processing, and/or providing information, such as information described herein. For example, endpoint device 210 may include a mobile phone (e.g., a smart phone or a radiotelephone), a laptop computer, a tablet computer, a desktop computer, a handheld computer, a gaming device, a wearable communication device (e.g., a smart watch, a pair of smart glasses, a heart rate monitor, a fitness tracker, smart clothing, smart jewelry, or a head mounted display), a network device, or a similar type of device. In some implementations, endpoint device 210 may receive network traffic from and/or may provide network traffic to other endpoint devices 210 and/or server device 230, via network 240 (e.g., by routing packets using network devices 220 as intermediaries).

Network device 220 includes one or more devices capable of receiving, processing, storing, routing, and/or providing traffic (e.g., a packet or other information or metadata) in a manner described herein. For example, network device 220 may include a router, such as a label switching router (LSR), a label edge router (LER), an ingress router, an egress router, a provider router (e.g., a provider edge router or a provider core router), a virtual router, or another type of router. Additionally, or alternatively, network device 220 may include a gateway, a switch, a firewall, a hub, a bridge, a reverse proxy, a server (e.g., a proxy server, a cloud server, or a data center server), a load balancer, and/or a similar device. In some implementations, network device 220 may be a physical device implemented within a housing, such as a chassis. In some implementations, network device 220 may be a virtual device implemented by one or more computer devices of a cloud computing environment or a data center. In some implementations, a group of network devices 220 may be a group of data center nodes that are used to route traffic flow through network 240.

Server device 230 includes one or more devices capable of receiving, generating, storing, processing, and/or providing information, such as information described herein. For example, server device 230 may include a laptop computer, a tablet computer, a desktop computer, a group of server devices, or a similar type of device, associated with multicast traffic. In some implementations, server device 230 may receive information from and/or transmit information (e.g., multicast traffic) to endpoint device 210, via network 240 (e.g., by routing packets using network devices 220 as intermediaries).

Network 240 includes one or more wired and/or wireless networks. For example, network 240 may include a packet switched network, a cellular network (e.g., a fifth generation (5G) network, a fourth generation (4G) network, such as a long-term evolution (LTE) network, a third generation (3G) network, a code division multiple access (CDMA) network, a public land mobile network (PLMN), a local area network (LAN), a wide area network (WAN), a metropolitan area network (MAN), a telephone network (e.g., the Public Switched Telephone Network (PSTN)), a private network, an ad hoc network, an intranet, the Internet, a fiber optic-based network, a cloud computing network, or the like, and/or a combination of these or other types of networks.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of environment 200 may perform one or more functions described as being performed by another set of devices of environment 200.

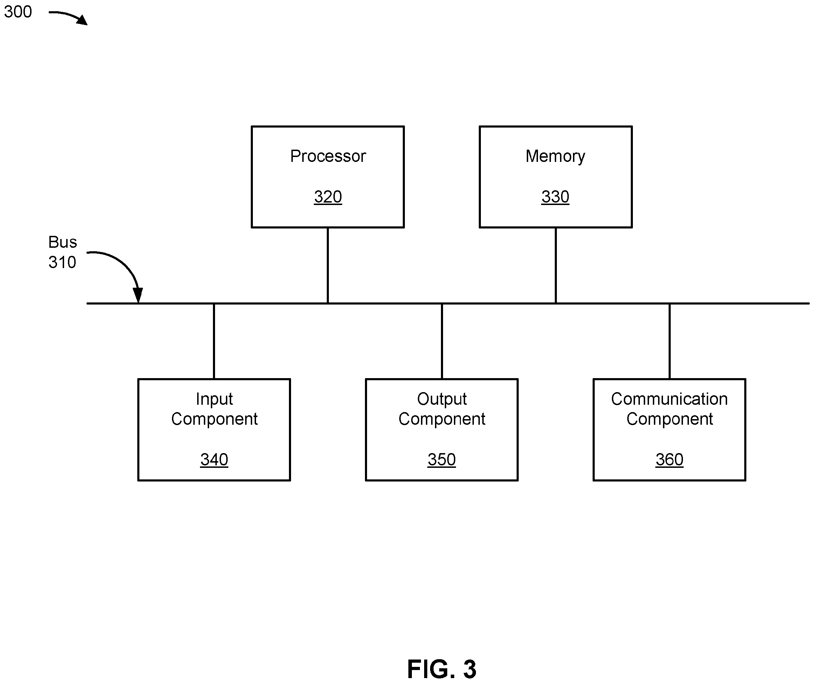

Fig. 3 is a diagram of example components of a device 300, which may correspond to endpoint device 210, network device 220, and/or server device 230. In some implementations, endpoint device 210, network device 220, and/or server device 230 include one or more devices 300 and/or one or more components of device 300. As shown in Fig. 3, device 300 may include a bus 310, a processor 320, a memory 330, an input component 340, an output component 350, and a communication component 360.

Bus 310 includes one or more components that enable wired and/or wireless communication among the components of device 300. Bus 310 may couple together two or more components of Fig. 3, such as via operative coupling, communicative coupling, electronic coupling, and/or electric coupling. Processor 320 includes a central processing unit, a graphics processing unit, a microprocessor, a controller, a microcontroller, a digital signal processor, a field-programmable gate array, an application-specific integrated circuit, and/or another type of processing component. Processor 320 is implemented in hardware, firmware, or a combination of hardware and software. In some implementations, processor 320 includes one or more processors capable of being programmed to perform one or more operations or processes described elsewhere herein.

Memory 330 includes volatile and/or nonvolatile memory. For example, memory 330 may include random access memory (RAM), read only memory (ROM), a hard disk drive, and/or another type of memory (e.g., a flash memory, a magnetic memory, and/or an optical memory). Memory 330 may include internal memory (e.g., RAM, ROM, or a hard disk drive) and/or removable memory (e.g., removable via a universal serial bus connection). Memory 330 may be a non-transitory computer-readable medium. Memory 330 stores information, instructions, and/or software (e.g., one or more software applications) related to the operation of device 300. In some implementations, memory 330 includes one or more memories that are coupled to one or more processors (e.g., processor 320), such as via bus 310.

Input component 340 enables device 300 to receive input, such as user input and/or sensed input. For example, input component 340 may include a touch screen, a keyboard, a keypad, a mouse, a button, a microphone, a switch, a sensor, a global positioning system sensor, an accelerometer, a gyroscope, and/or an actuator. Output component 350 enables device 300 to provide output, such as via a display, a speaker, and/or a light-emitting diode. Communication component 360 enables device 300 to communicate with other devices via a wired connection and/or a wireless connection. For example, communication component 360 may include a receiver, a transmitter, a transceiver, a modem, a network interface card, and/or an antenna.

Device 300 may perform one or more operations or processes described herein. For example, a non-transitory computer-readable medium (e.g., memory 330) may store a set of instructions (e.g., one or more instructions or code) for execution by processor 320. Processor 320 may execute the set of instructions to perform one or more operations or processes described herein. In some implementations, execution of the set of instructions, by one or more processors 320, causes the one or more processors 320 and/or the device 300 to perform one or more operations or processes described herein. In some implementations, hardwired circuitry is used instead of or in combination with the instructions to perform one or more operations or processes described herein. Additionally, or alternatively, processor 320 may be configured to perform one or more operations or processes described herein. Thus, implementations described herein are not limited to any specific combination of hardware circuitry and software.

The number and arrangement of components shown in Fig. 3 are provided as an example. Device 300 may include additional components, fewer components, different components, or differently arranged components than those shown in Fig. 3. Additionally, or alternatively, a set of components (e.g., one or more components) of device 300 may perform one or more functions described as being performed by another set of components of device 300.

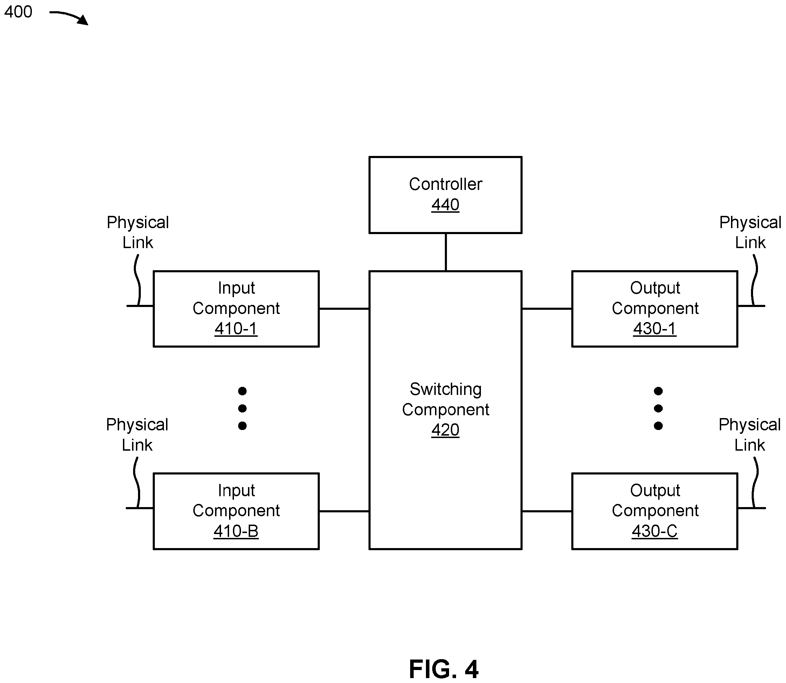

Fig. 4 is a diagram of example components of a device 400. Device 400 may correspond to endpoint device 210, network device 220, and/or server device 230. In some implementations, endpoint device 210, network device 220, and/or server device 230 may include one or more devices 400 and/or one or more components of device 400. As shown in Fig. 4, device 400 may include one or more input components 410-1 through 410-B (B ≥ 1) (hereinafter referred to collectively as input components 410, and individually as input component 410), a switching component 420, one or more output components 430-1 through 430-C (C ≥ 1) (hereinafter referred to collectively as output components 430, and individually as output component 430), and a controller 440.

Input component 410 may be one or more points of attachment for physical links and may be one or more points of entry for incoming traffic, such as packets. Input component 410 may process incoming traffic, such as by performing data link layer encapsulation or decapsulation. In some implementations, input component 410 may transmit and/or receive packets. In some implementations, input component 410 may include an input line card that includes one or more packet processing components (e.g., in the form of integrated circuits), such as one or more interface cards (IFCs), packet forwarding components, line card controller components, input ports, processors, memories, and/or input queues. In some implementations, device 400 may include one or more input components 410.

Switching component 420 may interconnect input components 410 with output components 430. In some implementations, switching component 420 may be implemented via one or more crossbars, via busses, and/or with shared memories. The shared memories may act as temporary buffers to store packets from input components 410 before the packets are eventually scheduled for delivery to output components 430. In some implementations, switching component 420 may enable input components 410, output components 430, and/or controller 440 to communicate with one another.

Output component 430 may store packets and may schedule packets for transmission on output physical links. Output component 430 may support data link layer encapsulation or decapsulation, and/or a variety of higher-level protocols. In some implementations, output component 430 may transmit packets and/or receive packets. In some implementations, output component 430 may include an output line card that includes one or more packet processing components (e.g., in the form of integrated circuits), such as one or more IFCs, packet forwarding components, line card controller components, output ports, processors, memories, and/or output queues. In some implementations, device 400 may include one or more output components 430. In some implementations, input component 410 and output component 430 may be implemented by the same set of components (e.g., and input/output component may be a combination of input component 410 and output component 430).

Controller 440 includes a processor in the form of, for example, a CPU, a GPU, an APU, a microprocessor, a microcontroller, a DSP, an FPGA, an ASIC, and/or another type of processor. The processor is implemented in hardware, firmware, or a combination of hardware and software. In some implementations, controller 440 may include one or more processors that can be programmed to perform a function.

In some implementations, controller 440 may include a RAM, a ROM, and/or another type of dynamic or static storage device (e.g., a flash memory, a magnetic memory, an optical memory, etc.) that stores information and/or instructions for use by controller 440.

In some implementations, controller 440 may communicate with other devices, networks, and/or systems connected to device 400 to exchange information regarding network topology. Controller 440 may create routing tables based on the network topology information, may create forwarding tables based on the routing tables, and may forward the forwarding tables to input components 410 and/or output components 430. Input components 410 and/or output components 430 may use the forwarding tables to perform route lookups for incoming and/or outgoing packets.

Controller 440 may perform one or more processes described herein. Controller 440 may perform these processes in response to executing software instructions stored by a computer-readable medium. A computer-readable medium may include a non-transitory memory device. A memory device includes memory space within a single physical storage device or memory space spread across multiple physical storage devices. Additionally, or alternatively, a computer-readable medium can include transient media such as carrier signals and transmission media.

Software instructions may be read into a memory and/or storage component associated with controller 440 from another computer-readable medium or from another device via a communication interface. When executed, software instructions stored in a memory and/or storage component associated with controller 440 may cause controller 440 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

The number and arrangement of components shown in Fig. 4 are provided as an example. In practice, device 400 may include additional components, fewer components, different components, or differently arranged components than those shown in Fig. 4. Additionally, or alternatively, a set of components (e.g., one or more components) of device 400 may perform one or more functions described as being performed by another set of components of device 400.

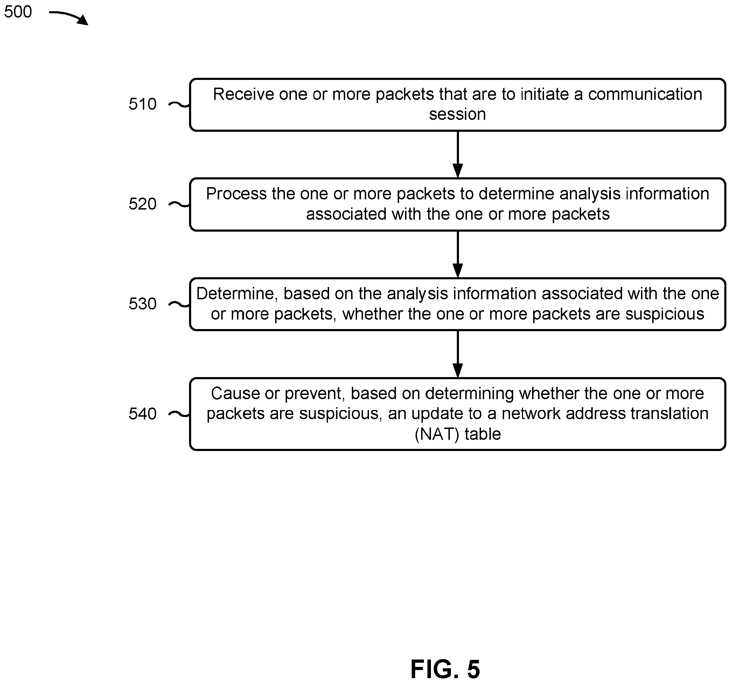

Fig. 5 is a flowchart of an example process 500 associated with causing or preventing an update to a NAT table. In some implementations, one or more process blocks of Fig. 5 are performed by a network device (e.g., network device 220). In some implementations, one or more process blocks of Fig. 5 are performed by another device or a group of devices separate from or including the network device, such as an endpoint device (e.g., endpoint device 210) and/or a server device (e.g., server device 230). Additionally, or alternatively, one or more process blocks of Fig. 5 may be performed by one or more components of device 300, such as processor 320, memory 330, input component 340, output component 350, and/or communication component 360; one or more components of device 400, such as input component 410, switching component 420, output component 430, and/or controller 440; and/or one or more components of another device.

As shown in Fig. 5, process 500 may include receiving one or more packets that are to initiate a communication session (block 510). For example, the network device may receive one or more packets that are to initiate a communication session, as described above.

As further shown in Fig. 5, process 500 may include processing the one or more packets to determine analysis information associated with the one or more packets (block 520). For example, the network device may process the one or more packets to determine analysis information associated with the one or more packets, as described above. In some implementations, the network device may process, using a plurality of packet analysis techniques, the one or more packets to determine analysis information.

As further shown in Fig. 5, process 500 may include determining, based on the analysis information associated with the one or more packets, whether the one or more packets are suspicious (block 530). For example, the network device may determine, based on the analysis information associated with the one or more packets, whether the one or more packets are suspicious, as described above.

As further shown in Fig. 5, process 500 may include causing or preventing, based on determining whether the one or more packets are suspicious, an update to a NAT table (block 540). For example, the network device may cause or prevent, based on determining whether the one or more packets are suspicious, an update to a NAT table, as described above. For example, the network device may cause or prevent inclusion in a NAT table, based on determining whether the one or more packets are suspicious, of at least one entry associated with the one or more packets and the communication session.

Process 500 may include additional implementations, such as any single implementation or any combination of implementations described below and/or in connection with one or more other processes described elsewhere herein.

In a first implementation, a packet analysis technique, of the plurality of packet analysis techniques, is an application identification technique, and processing the one or more packets to determine the analysis information includes processing, using the application identification technique, the one or more packets to identify an application associated with the one or more packets, and generating, using the application identification technique and based on the application associated with the one or more packets, information indicating whether the application is associated with one or more ports.

In a second implementation, alone or in combination with the first implementation, a packet analysis technique, of the plurality of packet analysis techniques, is a malware detection technique, and processing the one or more packets to determine the analysis information includes processing, using the malware detection technique, the one or more packets to identify at least one endpoint associated with the one or more packets, and generating, using the malware detection technique and based on the at least one endpoint associated with the one or more packets, information indicating whether the one or more packets are associated with at least one suspicious endpoint.

In a third implementation, alone or in combination with one or more of the first and second implementations, a packet analysis technique, of the plurality of packet analysis techniques, is an intrusion and detection technique, and processing the one or more packets to determine the analysis information includes processing, using the intrusion and detection technique, the one or more packets to determine at least one pattern associated with the one or more packets, and generating, using the intrusion and detection technique and based on the at least one pattern associated with the one or more packets, information indicating whether the one or more packets exhibit at least one suspicious pattern.

In a fourth implementation, alone or in combination with one or more of the first through third implementations, a packet analysis technique, of the plurality of packet analysis techniques, is a packet rate determination technique, and processing the one or more packets to determine the analysis information includes processing, using the packet rate determination technique, the one or more packets to determine a packet rate associated with the one or more packets, and generating, using the packet rate determination technique and based on the packet rate associated with the one or more packets, information indicating whether the packet rate associated with the one or more packets exceeds a packet rate threshold.

In a fifth implementation, alone or in combination with one or more of the first through fourth implementations, the analysis information associated with the one or more packets includes at least two of: information indicating whether an application indicated by the one or more packets is associated with one or more ports, information indicating whether the one or more packets are associated with at least one suspicious endpoint, information indicating whether the one or more packets exhibit at least one suspicious pattern, or information indicating whether a packet rate associated with the one or more packets exceeds a packet rate threshold.

In a sixth implementation, alone or in combination with one or more of the first through fifth implementations, determining whether the one or more packets are suspicious includes identifying a set of suspicious determination criteria, and determining, based on the analysis information associated with the one or more packets, that at least a subset of the set of suspicious determination criteria are satisfied, and determining, based on determining that at least a subset of the set of suspicious determination criteria are satisfied, that the one or more packets are suspicious.

In a seventh implementation, alone or in combination with one or more of the first through sixth implementations, determining whether the one or more packets are suspicious includes identifying a set of suspicious determination criteria; determining, based on the analysis information associated with the one or more packets, that at least a subset of the set of suspicious determination criteria are not satisfied; and determining, based on determining that at least a subset of the set of suspicious determination criteria are not satisfied, that the one or more packets are not suspicious.

In an eighth implementation, alone or in combination with one or more of the first through seventh implementations, causing inclusion, in the NAT table, of the at least one entry causes the communication session to be initiated.

In a ninth implementation, alone or in combination with one or more of the first through eighth implementations, process 500 includes, after causing the communication session to be initiated, determining that no additional packet associated with the communication session has been communicated for a threshold period of time, and causing, based on determining that no additional packet associated with the communication session has been communicated for the threshold period of time, the at least one entry to be removed from the NAT table.

Although Fig. 5 shows example blocks of process 500, in some implementations, process 500 includes additional blocks, fewer blocks, different blocks, or differently arranged blocks than those depicted in Fig. 5. Additionally, or alternatively, two or more of the blocks of process 500 may be performed in parallel.

Thus, from one perspective, there has now been described a network device which may be configured to receive one or more packets that are to initiate a communication session. The network device may be configured to process, using a plurality of packet analysis techniques, the one or more packets to determine analysis information associated with the one or more packets. The network device may be configured to determine, based on the analysis information associated with the one or more packets, whether the one or more packets are suspicious. The network device may be configured to cause or prevent inclusion in a NAT table, based on determining whether the one or more packets are suspicious, of at least one entry associated with the one or more packets and the communication session.

The foregoing disclosure provides illustration and description, but is not intended to be exhaustive or to limit the implementations to the precise forms disclosed. Modifications and variations may be made in light of the above disclosure or may be acquired from practice of the implementations.

As used herein, traffic or content may include a set of packets. A packet may refer to a communication structure for communicating information, such as a protocol data unit (PDU), a service data unit (SDU), a network packet, a datagram, a segment, a message, a block, a frame (e.g., an Ethernet frame), a portion of any of the above, and/or another type of formatted or unformatted unit of data capable of being transmitted via a network.

As used herein, satisfying a threshold may, depending on the context, refer to a value being greater than the threshold, greater than or equal to the threshold, less than the threshold, less than or equal to the threshold, equal to the threshold, not equal to the threshold, or the like.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

Even though particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set. As used herein, a phrase referring to "at least one of' a list of items refers to any combination of those items, including single members. As an example, "at least one of: a, b, or c" is intended to cover a, b, c, a-b, a-c, b-c, and a-b-c, as well as any combination with multiple of the same item.

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of').

Further examples of feature combinations taught by the present disclosure are set out in the following numbered clauses:
1. A network device, comprising:
   one or more memories; and
   one or more processors to:
      receive one or more packets that are to initiate a communication session;
      process, using a plurality of packet analysis techniques, the one or more packets to determine analysis information associated with the one or more packets;
      determine, based on the analysis information associated with the one or more packets, whether the one or more packets are suspicious; and
      cause or prevent inclusion in a network address translation (NAT) table, based on determining whether the one or more packets are suspicious, of at least one entry associated with the one or more packets and the communication session.
2. The network device of clause 1, wherein a packet analysis technique, of the plurality of packet analysis techniques, is an application identification technique,
   wherein the one or more processors, to process the one or more packets to determine the analysis information, are to:
   process, using the application identification technique, the one or more packets to identify an application associated with the one or more packets; and
   generate, using the application identification technique and based on the application associated with the one or more packets, information indicating whether the application is associated with one or more ports.
3. The network device of clause 1 or clause 2, wherein a packet analysis technique, of the plurality of packet analysis techniques, is a malware detection technique,
   wherein the one or more processors, to process the one or more packets to determine the analysis information, are to:
   process, using the malware detection technique, the one or more packets to identify at least one endpoint associated with the one or more packets; and
   generate, using the malware detection technique and based on the at least one endpoint associated with the one or more packets, information indicating whether the one or more packets are associated with at least one suspicious endpoint.
4. The network device of any preceding clause, wherein a packet analysis technique, of the plurality of packet analysis techniques, is an intrusion and detection technique,
   wherein the one or more processors, to process the one or more packets to determine the analysis information, are to:
   process, using the intrusion and detection technique, the one or more packets to determine at least one pattern associated with the one or more packets; and
   generate, using the intrusion and detection technique and based on the at least one pattern associated with the one or more packets, information indicating whether the one or more packets exhibit at least one suspicious pattern.
5. The network device of any preceding clause, wherein a packet analysis technique, of the plurality of packet analysis techniques, is a packet rate determination technique,
   wherein the one or more processors, to process the one or more packets to determine the analysis information, are to:
   process, using the packet rate determination technique, the one or more packets to determine a packet rate associated with the one or more packets; and
   generate, using the packet rate determination technique and based on the packet rate associated with the one or more packets, information indicating whether the packet rate associated with the one or more packets exceeds a packet rate threshold.
6. The network device of any preceding clause, wherein the analysis information associated with the one or more packets includes at least two of:
   information indicating whether an application indicated by the one or more packets is associated with one or more ports;
   information indicating whether the one or more packets are associated with at least one suspicious endpoint;
   information indicating whether the one or more packets exhibit at least one suspicious pattern; or
   information indicating whether a packet rate associated with the one or more packets exceeds a packet rate threshold.
7. The network device of any preceding clause, wherein the one or more processors, to determine whether the one or more packets are suspicious, are to:
   identify a set of suspicious determination criteria; and
   determine, based on the analysis information associated with the one or more packets, that at least a subset of the set of suspicious determination criteria are satisfied; and
   determine, based on determining that at least a subset of the set of suspicious determination criteria are satisfied, that the one or more packets are suspicious.
8. The network device of any preceding clause, wherein the one or more processors, to determine whether the one or more packets are not suspicious, are to:
   identify a set of suspicious determination criteria;
   determine, based on the analysis information associated with the one or more packets, that at least a subset of the set of suspicious determination criteria are not satisfied;
   determine, based on determining that at least a subset of the set of suspicious determination criteria are not satisfied, that the one or more packets are not suspicious.
9. The network device of any preceding clause, wherein causing inclusion, in the NAT table, of the at least one entry causes the communication session to be initiated.
10. The network device of clause 9, wherein the one or more processors, after causing the communication session to be initiated, are further to:
   determine that no additional packet associated with the communication session has been communicated for a threshold period of time; and
   cause, based on determining that no additional packet associated with the communication session has been communicated for the threshold period of time, the at least one entry to be removed from the NAT table.
11. A computer-readable medium including a set of instructions, the set of instructions comprising:
   one or more instructions that, when executed by one or more processors of a network device, cause the network device to:
   receive one or more packets that are to initiate a communication session;
   process, using a plurality of packet analysis techniques, the one or more packets to determine analysis information associated with the one or more packets;
   determine, based on the analysis information associated with the one or more packets, whether the one or more packets are suspicious; and
   cause or prevent, based on determining whether the one or more packets are suspicious, an update to a network address translation (NAT) table.
12. The computer-readable medium of clause 11, wherein the one or more instructions, that cause the network device to determine whether the one or more packets are suspicious, cause the network device to:
   determine, based on the analysis information associated with the one or more packets, that at least a subset of a set of suspicious determination criteria are satisfied.
13. The computer-readable medium of clause 11 or clause 12, wherein the one or more instructions, that cause the network device to determine whether the one or more packets are suspicious, cause the network device to:
   determine, based on the analysis information associated with the one or more packets, that at least a subset of a set of suspicious determination criteria are not satisfied.
14. The computer-readable medium of any of clauses 11 to 13, wherein the one or more instructions, that cause the network device to cause or prevent the update to the NAT table, cause the network device to:
   cause or prevent inclusion, in the NAT table, of at least one entry associated with the one or more packets and the communication session.
15. The computer-readable medium of any of clauses 11 to 14, wherein the one or more instructions, that cause the network device to cause the update to the NAT table, cause the network device to:
   route the one or more packets to another network device to cause the other network device to update the NAT table.
16. The computer-readable medium of any of clauses 11 to 15, wherein the one or more instructions, that cause the network device to prevent the update to the NAT table, cause the network device to:
   drop the one or more packets.
17. A method, comprising:
   receiving, by a network device, a packet associated with initiating a communication session;
   processing, by the network device, the packet to determine analysis information associated with packet;
   determining, by the network device and based on the analysis information associated with the packet, whether the packet is suspicious; and
   causing or preventing, by the network device and based on determining whether the packet is suspicious, an update to a network address translation (NAT) table.
18. The method of clause 17, wherein causing or preventing the update to the NAT table comprises:
   causing or preventing inclusion, in the NAT table, of at least one entry associated with the packet.
19. The method of clause 17 or clause 18, wherein causing the update to the NAT table comprises:
   routing the packet to an endpoint device,
   wherein routing the packet to the endpoint device causes the update to the NAT table.
20. The method of any of clauses 17 to 19, wherein preventing the update to the NAT table comprises:
   dropping the packet.

## Claims

1. A network device, comprising:
one or more memories; and
one or more processors to:
receive one or more packets that are to initiate a communication session;
process, using a plurality of packet analysis techniques, the one or more packets to determine analysis information associated with the one or more packets;
determine, based on the analysis information associated with the one or more packets, whether the one or more packets are suspicious; and
cause or prevent inclusion in a network address translation (NAT) table, based on determining whether the one or more packets are suspicious, of at least one entry associated with the one or more packets and the communication session.

2. The network device of claim 1, wherein a packet analysis technique, of the plurality of packet analysis techniques, is an application identification technique,
wherein the one or more processors, to process the one or more packets to determine the analysis information, are to:
process, using the application identification technique, the one or more packets to identify an application associated with the one or more packets; and
generate, using the application identification technique and based on the application associated with the one or more packets, information indicating whether the application is associated with one or more ports.

3. The network device of claim 1 or claim 2, wherein a packet analysis technique, of the plurality of packet analysis techniques, is a malware detection technique,
wherein the one or more processors, to process the one or more packets to determine the analysis information, are to:
process, using the malware detection technique, the one or more packets to identify at least one endpoint associated with the one or more packets; and
generate, using the malware detection technique and based on the at least one endpoint associated with the one or more packets, information indicating whether the one or more packets are associated with at least one suspicious endpoint.

4. The network device of any preceding claim, wherein a packet analysis technique, of the plurality of packet analysis techniques, is an intrusion and detection technique,
wherein the one or more processors, to process the one or more packets to determine the analysis information, are to:
process, using the intrusion and detection technique, the one or more packets to determine at least one pattern associated with the one or more packets; and
generate, using the intrusion and detection technique and based on the at least one pattern associated with the one or more packets, information indicating whether the one or more packets exhibit at least one suspicious pattern.

5. The network device of any preceding claim, wherein a packet analysis technique, of the plurality of packet analysis techniques, is a packet rate determination technique,
wherein the one or more processors, to process the one or more packets to determine the analysis information, are to:
process, using the packet rate determination technique, the one or more packets to determine a packet rate associated with the one or more packets; and
generate, using the packet rate determination technique and based on the packet rate associated with the one or more packets, information indicating whether the packet rate associated with the one or more packets exceeds a packet rate threshold.

6. The network device of any preceding claim, wherein the analysis information associated with the one or more packets includes at least two of:
information indicating whether an application indicated by the one or more packets is associated with one or more ports;
information indicating whether the one or more packets are associated with at least one suspicious endpoint;
information indicating whether the one or more packets exhibit at least one suspicious pattern; or
information indicating whether a packet rate associated with the one or more packets exceeds a packet rate threshold.

7. The network device of any preceding claim, wherein the one or more processors, to determine whether the one or more packets are suspicious, are to:
identify a set of suspicious determination criteria; and
determine, based on the analysis information associated with the one or more packets, that at least a subset of the set of suspicious determination criteria are satisfied; and
determine, based on determining that at least a subset of the set of suspicious determination criteria are satisfied, that the one or more packets are suspicious.

8. The network device of any preceding claim, wherein the one or more processors, to determine whether the one or more packets are not suspicious, are to:
identify a set of suspicious determination criteria;
determine, based on the analysis information associated with the one or more packets, that at least a subset of the set of suspicious determination criteria are not satisfied;
determine, based on determining that at least a subset of the set of suspicious determination criteria are not satisfied, that the one or more packets are not suspicious.

9. The network device of any preceding claim, wherein causing inclusion, in the NAT table, of the at least one entry causes the communication session to be initiated,
optionally wherein the one or more processors, after causing the communication session to be initiated, are further to:
determine that no additional packet associated with the communication session has been communicated for a threshold period of time; and
cause, based on determining that no additional packet associated with the communication session has been communicated for the threshold period of time, the at least one entry to be removed from the NAT table.

10. A computer-readable medium including a set of instructions, the set of instructions comprising:
one or more instructions that, when executed by one or more processors of a network device, cause the network device to:
receive one or more packets that are to initiate a communication session;
process, using a plurality of packet analysis techniques, the one or more packets to determine analysis information associated with the one or more packets;
determine, based on the analysis information associated with the one or more packets, whether the one or more packets are suspicious; and
cause or prevent, based on determining whether the one or more packets are suspicious, an update to a network address translation (NAT) table.

11. The computer-readable medium of claim 10, wherein the one or more instructions, that cause the network device to determine whether the one or more packets are suspicious, cause the network device to:
determine, based on the analysis information associated with the one or more packets, that at least a subset of a set of suspicious determination criteria are satisfied, and/or
determine, based on the analysis information associated with the one or more packets, that at least a subset of a set of suspicious determination criteria are not satisfied.

12. The computer-readable medium of claim 10 or claim 11, wherein the one or more instructions, that cause the network device to cause or prevent the update to the NAT table, cause the network device to:
cause or prevent inclusion, in the NAT table, of at least one entry associated with the one or more packets and the communication session.

13. The computer-readable medium of any of claims 10 to 12, wherein the one or more instructions, that cause the network device to cause the update to the NAT table, cause the network device to:
route the one or more packets to another network device to cause the other network device to update the NAT table.

14. The computer-readable medium of any of claims 10 to 13, wherein the one or more instructions, that cause the network device to prevent the update to the NAT table, cause the network device to:
drop the one or more packets.

15. A method, comprising:
receiving, by a network device, a packet associated with initiating a communication session;
processing, by the network device, the packet to determine analysis information associated with packet;
determining, by the network device and based on the analysis information associated with the packet, whether the packet is suspicious; and
causing or preventing, by the network device and based on determining whether the packet is suspicious, an update to a network address translation (NAT) table.
